# EUROPEAN PATENT APPLICATION

(11) **EP 4 819 372 A1**
(43) Date of publication of application: **07.10.2026**
(21) Application number: 24783551.5
(22) Date of filing: 06.03.2024
(51) Int. Cl.: H01M 50/593, H01M 50/586, H01M 10/0587

(54) **SECONDARY BATTERY**

(30) Priority: 30.10.2023 KR 20230146427
(71) Applicant: Samsung SDI Co., Ltd., Yongin-si, Gyeonggi-do 17084 (KR)
(72) Inventor: PARK, Sun Kyu, Yongin-si, Gyeonggi-do 17084 (KR)
(74) Representative: Marks & Clerk LLP
(86) International application number: PCT/KR2024/002913
(87) International publication number: WO 2025/095230

(57) **Abstract**

The present disclosure relates to a secondary battery, and a technical problem to be solved is to provide a secondary battery which is advantageous in terms of optimization of electrolyte utilization and safety by inserting a spacer into an empty space between a case and an electrode assembly to minimize a dead space. To this end, the present disclosure provides a secondary battery including an electrode assembly; a case accommodating the electrode assembly and having at least one opening; a cap assembly coupled through the opening to seal the case; and at least one first spacer in contact with one side of the electrode assembly and one side of the case to be interposed in a space between the electrode assembly and the case, and the first spacer is formed in a shape corresponding to the shape of a space between the electrode assembly and the case.

## Description

### [Technical Field]

An embodiments of the present disclosure relate to a secondary battery.

### [Background Art]

Unlike a primary battery that cannot be charged, a secondary battery is a battery that can be charged and discharged. Low-capacity batteries are used in portable small electronic devices such as smart phones or digital cameras, and large-capacity batteries in the form of a module in which dozens to hundreds of battery packs are connected are widely used as power sources for driving motors in hybrid vehicles, electric vehicles, or drones, or energy storage devices.

Such a rechargeable secondary battery includes an electrode assembly with a separator interposed between the positive and negative electrode plates, a current collector plate electrically connected to the electrode assembly, a terminal electrically connected to the current collector plate, a case accommodating the electrode assembly and the current collector plate, and a cap plate closing the case and having the terminal connected thereto while passing through the same.

A dead space, which is an empty space, may occur between the electrode assembly and the case. An electrolyte remaining in the dead space inside a cell does not participate in an electrochemical reaction, resulting in low usability. In addition, since the electrolyte must be injected into the cell, including a void volume, an increased amount of electrolyte is required. In addition, due to the empty space inside the cell, deformation may occur in the electrode assembly during collision or vibration.

The above-described information disclosed in the background technology of this invention is only for improving understanding of the background of the present disclosure, and accordingly, can include information which does not constitute the related art.

### [Disclosure]

### [Technical Problem]

The present disclosure provides a secondary battery, which is advantageous in terms of optimized electrolyte utilization and cell safety, by minimizing the empty space between a case and an electrode assembly.

However, technical problem to be solved by the present invention is not limited to those described above, and other problems that are not mentioned may be clearly understood by those skilled in the art from the description of the present disclosure provided below.

### [Technical Solution]

A secondary battery according to an embodiment of the present disclosure for solving the above technical problem may include: an electrode assembly; a case accommodating the electrode assembly and having at least one opening; a cap assembly coupled through the opening to seal the case; and at least one first spacer in contact with one side of the electrode assembly and one side of the case to be interposed in a space between the electrode assembly and the case, wherein the first spacer is formed in a shape corresponding to the shape of the space between the electrode assembly and the case.

The electrode assembly may include a first electrode and a second electrode, each including an electrode plate and an electrode uncoated portion, and the electrode uncoated portion of the first electrode and the electrode uncoated portion of the second electrode may protrude in at least one of a direction toward the cap assembly and a direction opposite to the cap assembly.

The first spacer may be formed as a pair on both sides of the electrode assembly where the electrode uncoated portion of the first electrode and the electrode uncoated portion of the second electrode do not protrude.

The electrode assembly may be a plurality of electrode assemblies.

The secondary battery may further include at least one second spacer that contacts one surface of the plurality of electrode assemblies and is interposed in a space between the plurality of electrode assemblies.

The second spacer may be formed in a shape corresponding to the shape of the space between the plurality of electrode assemblies.

The second spacer may be formed as a pair on both sides of each of the plurality of electrode assemblies where the electrode uncoated portion of the first electrode and the electrode uncoated portion of the second electrode do not protrude.

In the plurality of electrode assemblies, the electrode uncoated portion of the first electrode and the electrode uncoated portion of the second electrode may protrude in the same direction.

The first spacer and the second spacer may be formed to be separated from each other.

The first spacer and the second spacer may be integrally formed.

At least one of the first spacer and the second spacer may have an empty internal space.

At least one of the first spacer and the second spacer may be coupled to the inside of the case.

Further include a fixing member surrounding the sides of the plurality of electrode assemblies positioned in series.

At least one of the first spacer and the second spacer may be coupled to the plurality of electrode assemblies by the fixing member.

The first spacer and the second spacer may be made of an insulating material.

The electrode uncoated portion of the first electrode and the electrode uncoated portion of the second electrode may be spaced apart from each other and may protrude from the electrode plate toward the cap assembly.

The electrode assembly may be wound in a winding type.

### [Advantageous Effects]

According to embodiments of the present disclosure, by inserting a spacer into an empty space between a case and an electrode assembly to minimize a dead space, electrolyte utilization can be optimized and collision or deformation due to the empty space inside the cell can be prevented, thereby improving safety. In addition, the spacer can serve as a guide when assembling cells, thereby facilitating the assembling process.

However, the effects that can be achieved through the present disclosure are not limited to the above-mentioned effects, and other technical effects that have not been mentioned can be clearly understood by those skilled in the art from the description of the invention described below.

### [Description of Drawings]

FIG. 1 is a perspective view showing a secondary battery according to an embodiment of the present disclosure.
FIG. 2 is an exploded perspective view showing a partial configuration of the secondary battery of FIG. 1.
FIG. 3 is a cross-sectional view taken along line 3-3' of the secondary battery of FIG. 1.
FIG. 4 is a cross-sectional view of a secondary battery including one electrode assembly, according to an embodiment.
FIG. 5 is a cross-sectional view of a secondary battery including a plurality of electrode assemblies, according to an embodiment.
FIG. 6 is a cross-sectional view of a secondary battery including an empty spacer, according to an embodiment.
FIG. 7 is a perspective view showing a state in which a spacer of a secondary battery is coupled to a case, according to an embodiment.
FIG. 8 is a perspective view showing a state in which a spacer is coupled by a fixing member of a secondary battery according to an embodiment.

### [Best mode for carrying out the invention]

Hereinafter, preferred embodiments of the present disclosure will be described in detail with reference to the accompanying drawings. Prior to describing the present disclosure, terms or words used in the present specification and claims are not to be limitedly interpreted as general or dictionary meanings and should be interpreted as meanings and concepts that are consistent with the technical idea of the present invention on the basis of the principle that an inventor may properly define concepts of terms to describe his or her invention in the best way. Therefore, the embodiments described in this specification and the configurations shown in the drawings are only some of the most preferred embodiments of the present disclosure and do not represent all of the technical spirit of the present disclosure, so it should be understood that there may be various equivalents and variations that can be substituted for these at the time of this application.

In addition, as used herein, the terms that the terms "comprise or include" and/or "comprising or including" when used in this specification, specify the presence of stated features, numbers, steps, operations, elements, and/or components, but do not preclude the presence or addition of one or more other features, numbers, steps, operations, elements, components, and/or groups thereof.

In addition, for a better understanding of the present disclosure, the accompanying drawings may not be drawn to scale, and dimensions of some components may be exaggerated. In addition, the same reference numbers may be assigned to the same components in different embodiments.

A reference to two comparable objects being "the same" means that they are "substantially the same". Thus, the wording "substantially the same" may include a case of having a deviation that is considered low in the art, for example, a deviation of 5% or less. In addition, being uniform in a certain parameter in a predetermined region may mean that the parameter is uniform in terms of average.

Although the terms first, second, etc. may be used to describe various elements, these elements should not be limited by these terms. These terms may be only used to distinguish one element from another, and unless otherwise specifically stated, a first element may also be a second element.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "on", "connected to" or "coupled to" another component, these components may be directly linked or connected to each other, but another component may be "interposed" between the components", or the respective components may also be "linked", "coupled" or "connected" through another component.

As used herein, the term "and/or" includes any and all combinations of one or more of the associated listed items. In addition, when describing embodiments of the present disclosure, the use of "may" relates to "one or more embodiments of the present disclosure." Expressions such as "one or more" and "one or more" preceding a list of elements modify the entire list of elements and do not modify individual elements in the list.

Throughout the specification, when referring to "A and/or B", this means A, B or A and B, unless otherwise stated, and when referring to "C to D", this means that it is more than C and less than D, unless otherwise stated.

When a phrase "at least one of A, B, and C", "at least one of A, B, or C", "at least one selected from the group consisting of A, B, and C" or "at least one selected from A, B, and C" is used to specify the list of elements A, B, and C", the phrase may refer to any and all suitable combinations.

The term "use" may be considered synonymous with the term "utilize." As used herein, the terms "substantially", "about" and similar terms are used as terms of approximation rather than terms of degree, and are intended to take into account inherent variations in measured or calculated values as would be recognized by a person of ordinary skill in the art.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

As illustrated in the figures, for ease of description to describe one element or feature's relationship to another element(s) or feature(s), spatially relative terms, such as "beneath", "below", "lower", "above", "upper" and the like, may be used herein. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

The terminology used herein is for the purpose of describing particular embodiments only and is not intended to be limiting of the disclosure.

Hereinafter, in exemplary embodiments of a prismatic battery according to an embodiment of the present disclosure, one of the prismatic batteries is selected and the selected battery is described as having a general structure, and in the case of generally applied technology, a general structure of the prismatic battery will be described. However, the present disclosure is not limited to this, and the case may be configured in various shapes, such as a circular shape or a pouch shape. In addition, the case may be made of metal such as aluminum, an aluminum alloy, or nickel-plated steel, or a laminated film or plastic that constitutes a pouch.

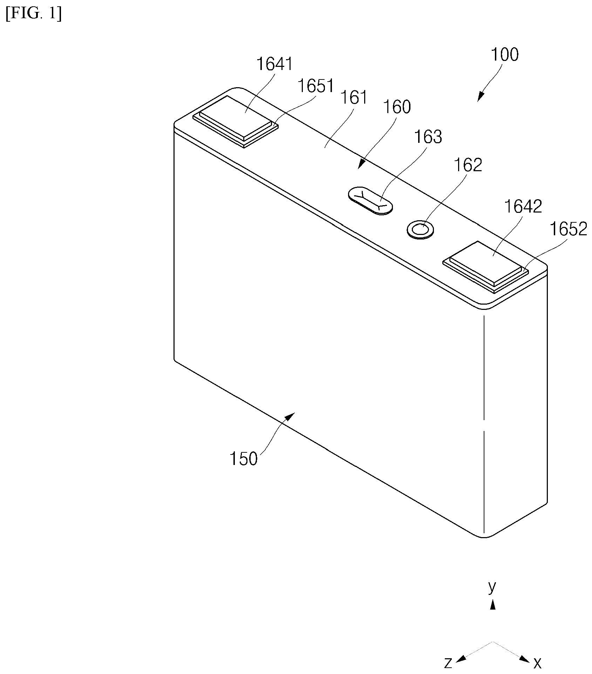

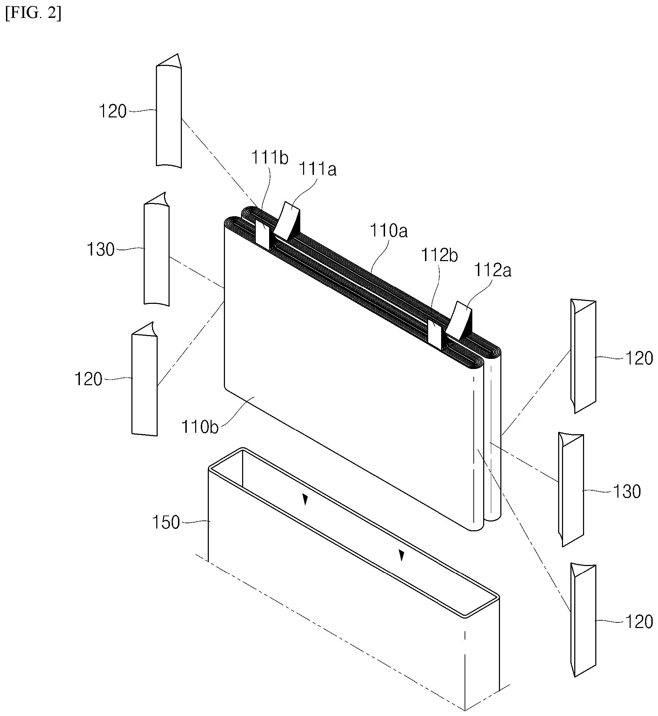

FIG. 1 is a perspective view showing a secondary battery according to an embodiment of the present disclosure, and FIG. 2 is an exploded perspective view showing a partial configuration of the secondary battery of FIG. 1.

Referring to FIGS. 1 and 2, the secondary battery 100 according to one embodiment may include an electrode assembly 110, spacers 120 and 130, a case 150, and a cap assembly 160.

The electrode assembly 110 may be formed by winding or stacking a laminate of a first electrode plate, a separator, and a second electrode plate, which are formed in a thin plate or film shape. However, in one embodiment, the electrode assembly 110 may be formed by being wound in a winding type. The electrode assembly 110 may have a winding axis parallel to the longitudinal direction (e.g., the y direction) of the case 150. In addition, the electrode assembly 110 may be accommodated inside the case 150 by stacking one or more electrode assemblies 110 so that the long sides thereof are adjacent to each other. In the present disclosure, the number of electrode assemblies 110 is not limited. Here, the first electrode plate may operate in a first polarity, for example, as a positive electrode, and the second electrode plate may operate in a second polarity, for example, a negative electrode. Of course, depending on the choice of a person skilled in the art, the first electrode plate and the second electrode plate may be arranged with different polarities.

The first electrode plate is formed by applying a first electrode active material such as a transition metal oxide to a first electrode current collector formed of a metal foil such as aluminum or an aluminum alloy, and may include a first electrode uncoated portion 111, which is a region to which the first active material is not applied. The first electrode uncoated portion 111 may have a path for current flow between the first electrode plate and the outside. In addition, the first electrode uncoated portion 111 may be formed to overlap at the same position when the first electrode plate is wound to form a multi-tap structure. The first electrode uncoated portion 111 is formed to protrude from one side of the electrode assembly 110, and in some cases, multiple first electrode uncoated portions 111 may be welded together to form one first current collection tab. The first electrode uncoated portion 111 may be aligned and protrude from one side of the electrode assembly 110. In some examples, the first electrode uncoated portion 111 may protrude from one side of the first electrode plate toward the cap assembly 160.

The second electrode plate is formed by applying a second electrode active material such as graphite or carbon to a second electrode current collector formed of a metal foil such as copper, a copper alloy, nickel, or a nickel alloy, and may include a second electrode uncoated portion 112, which is a region to which the second active material is not applied. The second electrode uncoated portion 112 may provide a path for current flow between the second electrode plate and the outside. In addition, the second electrode uncoated portion 112 may be formed to overlap at the same position when the second electrode plate is wound to form a multi-tap structure. The second electrode uncoated portion 112 is formed to protrude from one side of the electrode assembly 110, and in some cases, multiple second electrode uncoated portions 112 may be welded together to form one second current collection tab. In some examples, the second electrode uncoated portion 112 may protrude from one side of the second electrode plate toward the cap assembly 160.

In some examples, the first electrode uncoated portion 111 and the second electrode uncoated portion 112 may each protrude in parallel from the electrode assembly 110 toward the cap assembly 160. That is, in the electrode assembly 110, the first electrode uncoated portion 111 and the second electrode uncoated portion 112 may have different polarities and be spaced apart from each other. In addition, as described above, since the first electrode plate and the second electrode plate are formed by winding or overlapping, the first electrode uncoated portion 111 and the second electrode uncoated portion 112, which are repeatedly formed at each turn, may be formed by overlapping a plurality of thin films. In this way, when a plurality of thin films are formed by overlapping, in order to facilitate current movement, the thin films may be connected so as to come into contact with each other by ultrasonic welding.

The separator may be located between the first electrode plate and the second electrode plate to prevent short circuit and enable movement of lithium ions. The separator may be made of polyethylene, polypropylene, or a composite film of polyethylene and polypropylene. Meanwhile, the material of the separator does not limit the scope of the present invention. In some cases, the separator may be replaced with a solid electrolyte.

The electrode assembly 110 may be inserted into the case 150 in a direction parallel to the winding axis. In addition, the electrode assembly 110 may include a first electrode assembly 110a and a second electrode assembly 110b. Here, the first electrode assembly 110a and the second electrode assembly 110b may be electrically connected. In addition, the first electrode assembly 110a and the second electrode assembly 110b may be fixed through a separate fixing member 113 attached to some regions. The electrode assembly 110 can maintain its shape by means of the fixing member 113 and may then be connected to a current collector (not shown) at a correct position, and the shape of the electrode assembly 110 may be maintained even within a final secondary battery structure. In addition, in some examples, the spacers 120 and 130, which will be described later, may be fixed to the electrode assembly 110 by the fixing member 113. Meanwhile, although two electrode assemblies 110 are shown in FIG. 2, but the present invention is not limited thereto, and a number of electrode assemblies, such as a third electrode assembly 110c and a fourth electrode assembly 110d, etc., may be provided.

The electrode assembly 110 may be substantially accommodated in the case 150 together with an electrolyte. The electrolyte may be composed of an organic solvent such as ethylene carbonate (EC), propylene carbonate (PC), diethyl carbonate (DEC), ethyl methyl carbonate (EMC), or dimethyl carbonate (DMC), and a lithium salt such as LiPF6 or LiBF4. In addition, the electrolyte may be in a liquid, solid, or gel phase.

The spacers 120 and 130 are in contact with one side of the electrode assembly 110 and one side of the case 150 to be interposed in spaces between the electrode assembly 110 and the case 150, and may minimize a dead space, which is an empty space inside the case 150. The spacers 120 and 130 will later be described in more detail.

The case 150 may be shaped of a hollow rectangular parallelepiped having an opening at a top portion thereof. Accordingly, the electrode assembly 110 can be inserted into the case 150 through the opening. The case 150 may include a bottom portion, a pair of long side portions, and a pair of short side portions connecting the pair of long side portions, and an opening may be provided opposite the bottom portion. A cap plate 161 may be coupled to the opening of the case 150 to seal the case 150. The inner surface of the case 150 is basically insulated, thereby preventing electrical short circuits from occurring inside. In addition, in some cases, one electrode of the electrode assembly 110 may be electrically connected to the case 150 through the cap plate 161. Even in this case, an internal electrical short circuit can be prevented by insulating the inside of the case 150. In some examples, the case 150 may be made of a conductive metal such as aluminum, an aluminum alloy, or nickel-plated steel, and may be manufactured by a deep drawing process or a bending and welding process.

The cap assembly 160 may be coupled to the top portion (opening) of the case 150. Specifically, the cap assembly 160 may include a cap plate 161, an electrolyte injection port 162, a safety vent 163, a first terminal plate 1641, a second terminal plate 1642, a first insulating member 1651, and a second insulating member 1652.

The cap plate 161 seals the opening of the case 150 and may be made of the same material as the case 150. The cap plate 161 has a flat plate shape and may be made of a thin plate. For example, the cap plate 161 may be coupled to the case 150 using laser welding. In addition, the cap plate 161 may be electrically independent or, in some cases, may be electrically connected to a current collector plate.

In addition, the electrolyte injection port 162 for injecting an electrolyte may be formed in the cap plate 161. The electrolyte is injected into the interior of the case 150 through the electrolyte injection port 162, and the electrolyte injection port 162 may later be sealed with a stopper.

In addition, a safety vent 163 may be formed at approximately the center of the cap plate 161 with a relatively small thickness compared to other regions. The safety vent 163 may prevent the secondary battery 100 according to an embodiment of the present disclosure from breaking and exploding when the pressure inside the case 150 is higher than a set breaking pressure.

A first terminal plate 1641 and a second terminal plate 1642 may be electrically connected to the first and second electrode plates of the electrode assembly 110 by means of each current collector plate. That is, the first terminal plate 1641 may operate in a first polarity, for example, as a positive electrode, and the second terminal plate 1642 may operate in a second polarity, for example, as a negative electrode. Here, although not shown in the drawing, the current collector plate may be electrically connected to the first electrode uncoated portion 111 and the second electrode uncoated portion 112. The current collector plate may be electrically connected to the first electrode plate and the second electrode plate by contacting the first electrode uncoated portion 111 and the second electrode uncoated portion 112 protruding from one end of the electrode assembly 110.

A first insulating member 1651 and a second insulating member 1652 may be formed between each of the first terminal plate 1641 and the second terminal plate 1642 and the cap plate 161. The first insulating member 1651 and the second insulating member 1652 are formed to surround the outside of each of the first terminal plate 1641 and the second terminal plate 1642, and may be made of an insulating material. In addition, each of the first insulating member 1651 and the second insulating member 1652 may seal a portion between the first terminal plate 1641 and the second terminal plate 1642. The first insulating member 1651 and the second insulating member 1652 may prevent external moisture from penetrating into the interior of the secondary battery 100 or prevent the electrolyte contained within the secondary battery 100 from leaking out.

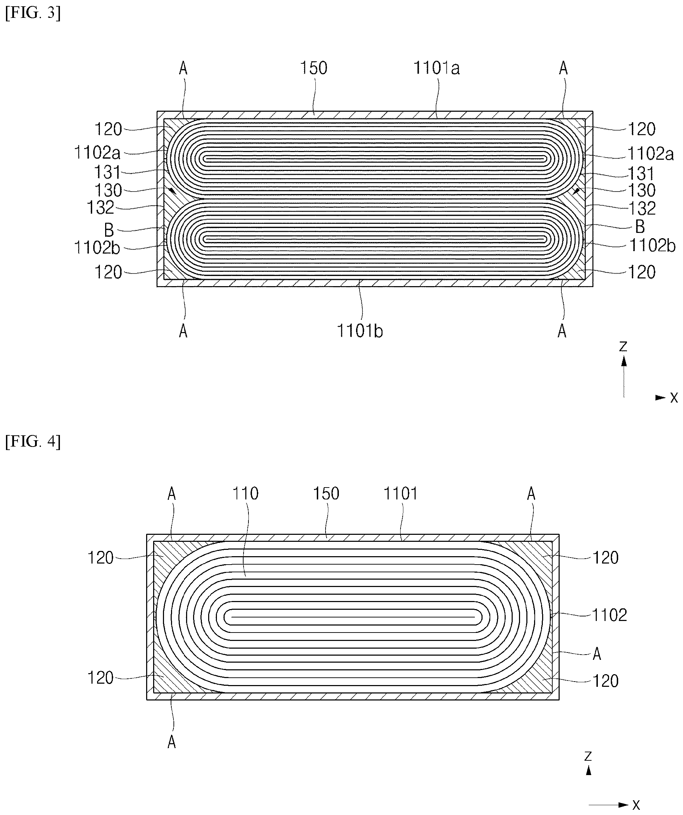

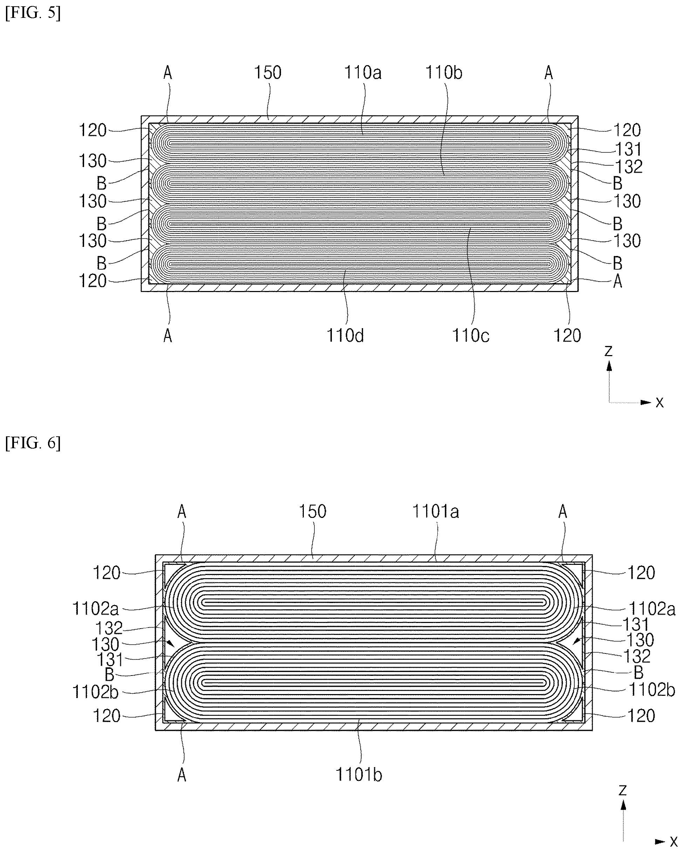

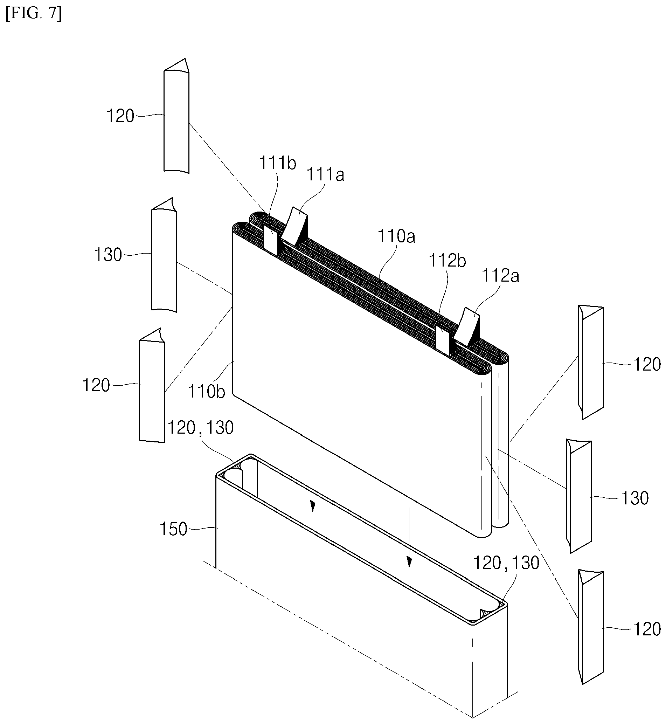

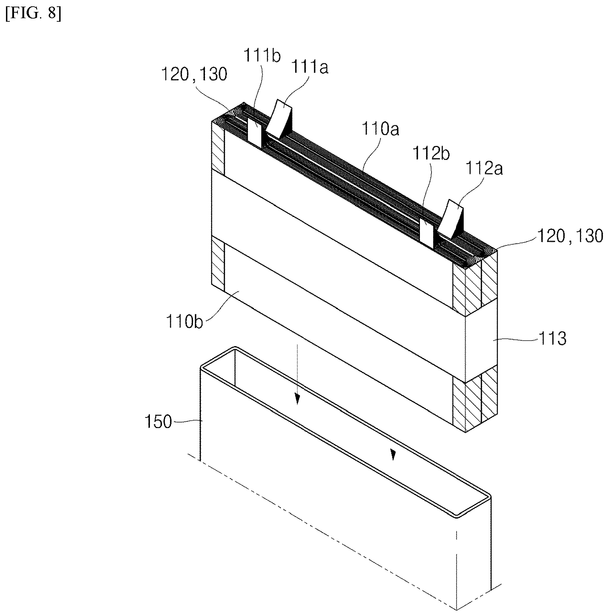

FIG. 3 is a cross-sectional view taken along line 3-3' of the secondary battery of FIG. 1, FIG. 4 is a cross-sectional view of a secondary battery including one electrode assembly, according to an embodiment, FIG. 5 is a cross-sectional view of a secondary battery including a plurality of electrode assemblies, according to an embodiment, FIG. 6 is a cross-sectional view of a secondary battery including an empty spacer, according to an embodiment, FIG. 7 is a perspective view showing a state in which a spacer of a secondary battery is coupled to a case, according to one embodiment, and FIG. 8 is a perspective view showing a state in which a spacer is coupled by a fixing member of a secondary battery according to an embodiment.

As described above, in the present disclosure, the winding type electrode assembly 110 may be applied and a dead space may be produced inside the case 150 by a short-side curved portion 1102 of the electrode assembly 110. The electrolyte remaining in the dead space does not participate in a electrochemical reaction, resulting in low usability, and thus the electrolyte needs to be additionally injected into a void volume, which may require more electrolyte. In addition, due to the empty space within the case 150, deformation may occur in the electrode assembly 110 during collision or vibration. That is, due to the characteristics of the winding-type electrode assembly 110, there may be a problem in that electrolyte optimization is difficult and cell safety is reduced due to the dead space caused by a short-side curved portion 1102.

Accordingly, referring to FIGS. 3 to 5, in one embodiment of the present disclosure, the dead space may be minimized by inserting the spacers 120 and 130 into the empty space inside the case 150, thereby reducing the amount of remaining electrolyte that does not participate in the electrochemical reaction. In addition, the spacers 120 and 130 may serve as guides when assembling cells, thereby facilitating the assembly process. In addition, in the present disclosure, the empty space inside the case 150 is filled with spacers 120 and 130 to prevent the electrode assembly 110 from moving when shock is applied to the battery cells, thereby mitigating physical shock and improving safety. The spacers 120 and 130 will now be described in more detail.

In some examples, the electrode assembly 110 may include a pair of long side portions and a pair of short side portions connecting the pair of long side portions. In addition, the electrode assembly 110 may have a flat portion 1101 and a curved portion 1102. The pair of long side portions may have a flat portion 1101, and the pair of short side portions may have a curved portion 1102, by which an empty space is formed between the curved portion 1102 and the case 150, and the empty space may be referred to as a first region (A). The first region (A) may have four regions formed at corners between the electrode assembly 110 and the case 150, regardless of the number of electrode assemblies 110. These four first regions (A) may be formed in slightly different shapes depending on the winding type of the electrode assembly 110, but the following description will be given on the assumption that the first regions (A) have the same shape.

The first regions (A) may have a curved portion formed by the curved portion 1102 of the electrode assembly 110 and a corner portion formed by the edge of the case 150. That is, the shapes of the first regions (A) may be formed according to the shapes of the curved portions 1102 of the electrode assembly 110 and the shapes of edge portions of the case 150.

In some examples, the first spacers 120 may be interposed in the first regions (A). That is, the first spacers 120 may be formed in shapes corresponding to the shapes of the first regions (A) and may be interposed at the four corners, respectively. Like the first regions (A), the first spacers 120 may be formed in slightly different shapes, but the following description will be given on the assumption that the first spacers 120 have the same shape. The first spacers 120 are interposed in the first regions (A) so as to make no empty spaces produced in the first regions (A), and thus may be formed to have shapes corresponding to the shapes of the first regions (A). Each of the first spacers 120 may include a first surface 121 in contact with the electrode assembly 110, corresponding to the curved portion of the first region (A), and two second surfaces 122 in contact with the edge portions of the case 150, corresponding to the edge portions of the first regions (A). That is, the first surface 121 of the first spacer 120 may be formed as a curve corresponding to the curved portion 1102 of the electrode assembly 110. In addition, the second surface 122 of the first spacer 120 is in contact with the edge portions of the case 150 and thus may be formed to correspond the edge shapes of the case 150. For example, when the edge is at a right angle, the two second surfaces 122 of the first spacer 120 may be connected at a right angle. That is, the first spacer 120 may have the shape of a triangular pillar in which the first surface 121 is formed in a concave curve. However, when the edge is formed with a gentle curve, the two surfaces of the second surface 122 of the first spacer 120 may be connected with a gentle curve.

Meanwhile, in some examples, when the electrode assembly 110 consists of a plurality of electrode assemblies, an empty space may be formed between adjacent electrode assemblies 110a to 110d by the curved portion 1102 of each electrode assembly 110. The empty space may be referred to as a second region (B). For example, when the electrode assembly 110 consists of two electrode assemblies, the second region (B) may have two regions, each one formed on both sides of the electrode assemblies 110a and 110b. In addition, when the electrode assembly 110 consists of four electrode assemblies, the second region (B) may have six regions, each three formed on both sides of the electrode assemblies 110a and 110b. The plurality of second regions (B) may be formed in different shapes depending on the winding type of the electrode assembly 110, but the following description will be given on the assumption that the second regions (B) have the same shape. The plurality of second regions (B) may be formed in different shapes depending on the winding type of the electrode assembly 110, but the following description will be given on the assumption that the second regions (B) have the same shape.

The second regions (B) may have a curved portion formed by the curved portions 1102a and 1102b of the electrode assemblies 110a and 110b and a straight portion formed by the case 150. That is, the second regions (B) may be shaped according to the shapes of the curved portions 1102a and 1102b of the electrode assemblies 110a and 110b. In addition, when the shape of the inner surface of the case 150 is not a uniform surface and a pattern is formed, the shapes of the straight portions of the second regions (B) may be formed according to the pattern.

In some examples, the second spacers 130 may be interposed in the second regions (B). That is, the second spacer 130 may be formed in shapes corresponding to the shapes of the second regions (B) and may be interposed between adjacent electrode assemblies 110a and 110b, respectively. Like the second regions (B), all of the second spacers 130 may be formed in slightly different shapes, but the following description will be given on the assumption that the second spacers 130 have the same shape. The second spacers 130 are interposed in the second regions (B) so as to make no empty spaces produced in the second regions (B), and thus may be formed to have shapes corresponding to the shapes of the second regions (B). Each of the second spacers 130 may include two first surfaces 131 in contact with the electrode assemblies 110, corresponding to the curved portions of the second regions (B), and a second surface 132 in contact with the inner surface of the case 150, corresponding to the straight portions of the second regions (B). That is, the first surfaces 131 of the second spacer 130 may be formed as curves corresponding to the curved portions 1102a and 1102b of the electrode assemblies 110a and 110b. In addition, the second surface 132 of the second spacer 130 is in contact with the inner surface of the case 150, and thus may be formed as a straight line. For example, the second spacer 130 may have the shape of a triangular pillar in which the two first surfaces 131 are formed in concave curves.

The first spacer 120 and the second spacer 130 may be formed as a pair on both sides of the electrode assembly 110 where the first electrode uncoated portion 111 and the second electrode uncoated portion 112 do not protrude. In some examples, the same first spacer 120 and the same second spacer 130 may be disposed on the left and right sides of the electrode assembly 110, respectively. Accordingly, in one embodiment of the present disclosure, the first spacer 120 and the second spacer 130 are interposed in the empty spaces within the case 150, and thus dead spaces can be eliminated.

In some examples, the first spacer 120 and the second spacer 130 may be separated from each other. That is, the first spacer 120 and the second spacer 130 may be formed as separate structures, but not limited thereto. Alternatively, the first spacer 120 and the second spacer 130 may be integrally formed. For example, the first spacer 120 and the second spacer 130 may be integrally manufactured or combined.

In addition, referring to FIG. 6, at least one of the first spacer 120 and the second spacer 130 may be formed to have an empty internal space. In some examples, all of the first spacers 120 and the second spacers 130 may be formed to have empty internal spaces, or some of the first spacers 120 and second spacers 130 may be formed to have empty internal spaces. Accordingly, in one embodiment of the present disclosure, the weight of the secondary battery 100 can be reduced.

Meanwhile, referring to FIG. 7, at least one of the first spacer 120 and the second spacer 130 may be coupled to the inside of the case 150. For example, the first spacer 120 and the second spacer 130 may be designed in advance to suit the cell design (the thickness of an electrode assembly, the number of electrode assemblies, etc.) and the shape of the case 150, and thus may be attached to the case 150 in advance before the electrode assembly 110 is inserted into the case 150.

In addition, referring to FIG. 8, in some examples, at least one of the first spacer 120 and the second spacer 130 may be coupled to the plurality of electrode assemblies 110 by a fixing member 113. For example, after assembling the electrode assembly 110 and the cap assembly 160, the first spacer 120 and the second spacer 130 may be fixed to the electrode assembly 110 by taping and fixing the fixing member 113, thereby attaching the same to the electrode assembly 110 before inserting the case 150.

These the first spacer 120 and the second spacer 130 may be made of an insulating material and may be made of a material that does not undergo an electrochemical reaction inside a cell. For example, the first spacer 120 and the second spacer 130 may be formed of one or a mixture of two or more selected from the group consisting of polypropylene (PP), polymethylpentene (PMP), polyethyleneterephthalate (PET), polyester, polyacetal, polyamide, polycarbonate, polyimide, polyetheretherketone, polyetherimide (PEI), polyamideimide, polyethersulfone (PES), polyphenyleneoxide, polyphenylenesulfide, and polyethylenenaphthalene. In some examples, the first spacer 120 and the second spacer 130 may be made of the same material, but are not limited thereto. Rather, the first spacer 120 and the second spacer 130 may be made of different materials.

What has been described above is only one example for implementing an exemplary secondary battery according to the present disclosure, and the present disclosure is not limited to the above-described embodiments. As claimed in the following patent claims, the technical spirit of the present disclosure exists to the extent that various modifications can be made by those skilled in the field without departing from the gist of the present disclosure. That is, although the present disclosure has been described with limited examples and drawings, it is not limited thereto and various modifications and variations can be made by those skilled in the art in the technical field to which this disclosure belongs within the scope of equivalence between the technical idea of this disclosure and the scope of the following claims.

## Claims

1. A secondary battery comprising:
an electrode assembly;
a case accommodating the electrode assembly and having at least one opening;
a cap assembly coupled through the opening to seal the case; and
at least one first spacer in contact with one side of the electrode assembly and one side of the case to be interposed in a space between the electrode assembly and the case,
wherein the first spacer is formed in a shape corresponding to the shape of the space between the electrode assembly and the case.

2. The secondary battery as claimed in claim 1, wherein the electrode assembly comprises a first electrode and a second electrode, each including an electrode plate and an electrode uncoated portion, and the electrode uncoated portion of the first electrode and the electrode uncoated portion of the second electrode protrude in at least one of a direction toward the cap assembly and a direction opposite to the cap assembly.

3. The secondary battery as claimed in claim 2, wherein the first spacer is formed as a pair on both sides of the electrode assembly where the electrode uncoated portion of the first electrode and the electrode uncoated portion of the second electrode do not protrude.

4. The secondary battery as claimed in claim 3, wherein the electrode assembly is formed a plurality of electrode assemblies.

5. The secondary battery as claimed in claim 4, further comprising at least one second spacer that contacts one surface of the plurality of electrode assemblies and is interposed in a space between the plurality of electrode assemblies.

6. The secondary battery as claimed in claim 5, wherein the second spacer is formed in a shape corresponding to the shape of the space between the plurality of electrode assemblies.

7. The secondary battery as claimed in claim 5, wherein the second spacer is formed as a pair on both sides of each of the plurality of electrode assemblies where the electrode uncoated portion of the first electrode and the electrode uncoated portion of the second electrode do not protrude.

8. The secondary battery as claimed in claim 4, wherein in the plurality of electrode assemblies, the electrode uncoated portion of the first electrode and the electrode uncoated portion of the second electrode protrude in the same direction.

9. The secondary battery as claimed in claim 5, wherein the first spacer and the second spacer are formed to be separated from each other.

10. The secondary battery as claimed in claim 5, wherein the first spacer and the second spacer are integrally formed.

11. The secondary battery as claimed in claim 5, wherein at least one of the first spacer and the second spacer is formed as an empty internal space.

12. The secondary battery as claimed in claim 5, wherein at least one of the first spacer and the second spacer is coupled to the inside of the case.

13. The secondary battery as claimed in claim 5, further comprising a fixing member surrounding the sides of the plurality of electrode assemblies positioned in series.

14. The secondary battery as claimed in claim 13, wherein at least one of the first spacer and the second spacer is coupled to the plurality of electrode assemblies by the fixing member.

15. The secondary battery as claimed in claim 5, wherein the first spacer and the second spacer are made of an insulating material.

16. The secondary battery as claimed in claim 2, wherein the electrode uncoated portion of the first electrode and the electrode uncoated portion of the second electrode are spaced apart from each other and protrude from the electrode plate toward the cap assembly.

17. The secondary battery as claimed in claim 1, wherein the electrode assembly is wound in a winding type.
